(19) Europäisches Patentamt
European Patent Office
Office européen des brevets

(11) **EP 1 520 829 B1**

(12) **EUROPEAN PATENT SPECIFICATION**

(45) Date of publication and mention
of the grant of the patent:
**01.04.2020 Bulletin 2020/14**

(51) Int Cl.:
***B66B 5/02*** *(2006.01)*     ***B66B 1/28*** *(2006.01)*

(21) Application number: **02745914.8**

(22) Date of filing: **10.07.2002**

(86) International application number:
**PCT/JP2002/006999**

(87) International publication number:
**WO 2004/007333 (22.01.2004 Gazette 2004/04)**

(54) **CONTROLLER OF ELEVATOR**

STEUERUNG FÜR AUFZUG

UNITE DE COMMANDE D'ASCENSEUR

(84) Designated Contracting States:
**DE NL**

(43) Date of publication of application:
**06.04.2005 Bulletin 2005/14**

(73) Proprietor: **MITSUBISHI DENKI KABUSHIKI KAISHA**
**Chiyoda-ku**
**Tokyo 100-8310 (JP)**

(72) Inventors:
• **KAWAGUCHI, Moriya**
**c/o Mitsubishi Denki K. K.**
**Chiyoda-ku, Tokyo 100-8310 (JP)**

• **YASUE, Masanori**
**c/o Mitsubishi Denki K. K.**
**Chiyoda-ku, Tokyo 100-8310 (JP)**

(74) Representative: **Hoffmann Eitle**
**Patent- und Rechtsanwälte PartmbB**
**Arabellastraße 30**
**81925 München (DE)**

(56) References cited:
**EP-A- 0 733 578       WO-A-98/47806**
**GB-A- 1 207 363       JP-A- 2000 309 475**
**JP-A- 2000 309 475    JP-U- 60 135 097**
**US-A- 5 698 823       US-B1- 6 264 005**

**Description**

TECHNICAL FIELD

The present invention relates to a control apparatus for an elevator using, as a winch, a synchronous motor with a permanent magnet as a field magnet, and more particularly, to a dynamic brake circuit utilizing such a permanent magnet synchronous motor.

BACKGROUND ART

A dynamic brake uses a braking force generated by short circuiting power supply terminals (U, V, W) of a permanent magnet synchronous motor in the form of a synchronous motor employing a permanent magnet as a field magnet during the rotation thereof by means of a prescribed impedance. In an elevator adopting such a permanent magnet synchronous motor, a dynamic brake is effective as an auxiliary means for making a car under traveling an emergency stop, and a variety of related ideas have hitherto been proposed.

An example can be seen in JP2000309475.

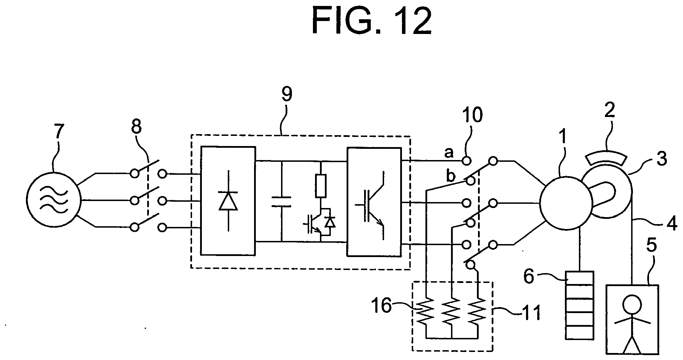

Fig. 12 is a constructional view of a control apparatus for an elevator including such a kind of known dynamic brake as disclosed in Japanese patent application laid-open No. H09-9699 for instance. In this figure, 1 designates a permanent magnet synchronous motor acting as a winch, 2 a brake, 3 a sheave, 4 a rope wrapped around the sheave 3, 5 a car connected with one end of the rope 4, and 6 a counter weight connected with the other end of the rope 4 for compensating for half the weight of the car 5 and the movable or carrying load.

In addition, 7 designates a three-phase AC power supply, 8 a magnetic contactor, 9 an inverter for supplying electric power of a variable voltage and a variable frequency (VVVF) to the motor 1, 10 a switching device for brake switching, and 11 an external impedance circuit for dynamic braking comprising a resistor 16.

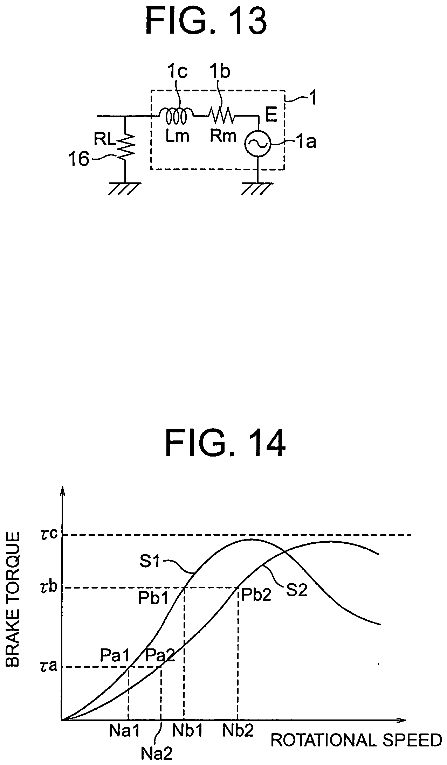

Fig. 13 is an equivalent circuit showing a dynamic brake circuit in more detail. 1a designates a speed induced voltage (E) of the motor 1, 1b a winding resistance (Rm) of the motor 1, 1c a winding inductance (Lm) of the motor 1, and 16 a resistance (RL) constituting the above-mentioned external impedance 11 for dynamic braking. That is, the dynamic brake circuit is composed of the winding resistance (Rm) and the winding inductance (Lm) of the winding of the motor 1, the external impedance (RL) and the power supply (E) due to the speed induced voltage generated by the rotation of the motor. The greater an electric current flowing through the dynamic brake circuit, and the smaller a phase difference between the electric current and the induced voltage, the greater becomes dynamic brake torque generated by the dynamic brake circuit. Accordingly, the dynamic brake circuit has the following characteristic: that is, as the rotational speed of the motor increases, the speed induced voltage is rising, in accordance with which the electric current is increasing so that the braking torque becomes greater and greater. When the frequency of the electric current rises to exceed a certain frequency due to a further increase of the motor rotational speed, however, the influence of inductance increases so the phase difference becomes greater, thus decreasing the braking torque. Fig. 14 shows the dynamic brake characteristic of the dynamic brake circuit of Fig. 13.

Now, the operation of the dynamic brake circuit will be described. When the elevator is actuated, the magnetic contactor 8 is closed and the brake switching device 10 is set to side a, so that the electric power fed from the three-phase AC power supply 7 is supplied to the motor 1 through the inverter 9 which converts the voltage and frequency of the electric power. Thereafter, the brake 2 is released so that the sheave 3 is driven to rotate by means of the motor 1 thereby to move the car 5 in a vertical direction.

In cases where a braking force for decelerating the car 5 is required such as when an emergency situation takes place, the inverter 9 is stopped and the magnetic contactor 8 is opened to isolate the motor 1 from the three-phase AC power supply 7, and at the same time the brake 2 is closed or actuated to brake the rotation of the sheave 3, thereby decelerating the car 5. Further, simultaneous with this, the brake switching device 10 is switched to be connected to side b so that the terminals of the motor 1 are short circuited with each other through the external impedance 11. As a result, a braking force is generated in the rotating motor 1 to assist the deceleration of the car 5.

This dynamic brake can also be applied to rescue operation after an emergency stop of an elevator. That is, when the elevator is stopped in emergency due to power failure or other reasons, the car 5 general stops at a location displaced from a floor level. Accordingly, in order to rescue passengers in the car, it is required that the brake 2 be released to cause the motor 1 and the sheave 3 to rotate under the action of an unbalanced torque based on a difference in mass between the car 5 and the counter weight 6 thereby to move the car to the nearest floor level and stop it there. At this time, in the case of the winch using the permanent magnet synchronous the motor 1, by short circuiting the motor terminals, the motor generally comes to act as a dynamic brake, thereby making it possible to suppress the speed increase of the car to permit its gradual movement.

Next, the principles of generation of the dynamic brake will be described with reference to Fig. 13. When the motor 1 comes into generator operation by being caused to rotate under the action of the unbalanced torque based on a difference in mass between the car 5 and the weight 6 as well as the kinetic energy thereof at that time, the induced voltage E(1a) generated in the motor 1 is applied to the circuit shorted through the external resistance RL(16), whereby electric current flows through the motor. As a result, braking torque is generated by this electric current and the magnetic flux created by the permanent magnet of the motor 1. Here, note that the resistance value R of the shorted circuit is equal to the sum of the winding resistance Rm of the motor (1b) and the external resistance RL(16), and the reactance X is a value proportional to the winding inductance Lm(1c) of the motor and the rotational speed thereof. Thus, the phase of the electric current flowing through the motor is delayed with respect to the induced voltage E(1a) by the influence of the reactance X.

The torque characteristic (dynamic brake characteristic) of such a circuit system is shown in Fig. 14. The braking torque exhibits a characteristic having a maximum value at a certain speed. That is, the braking torque rises in accordance with the increasing rotational speed of the motor, but falls after it has reached a peak at a certain speed. The reason for the braking torque increasing in accordance with the increasing rotational speed is that as the rotational speed increases, the voltage E(1a) induced in the motor also is increased, thereby increasing the electric current. In addition, the reason for the braking torque falling from the certain speed is that as the rotational speed increases, the influence of the reactance X becomes greater and greater, so that the phase of the electric current is further delayed, as a consequence of which the torque no more increases even if the electric current increases.

The speed at which the a torque is reached is decided by the ratio (R/X) of the resistance value R to the reactance X of the shorted circuit, and hence the maximum torque is governed by the reactance X. Accordingly, there can be obtained various torque characteristics S1, S2 in accordance with the value of an external resistance RL, as shown in Fig. 14. In this case, the external resistance value RL is greater in S2 than in S1, but the maximum torque is governed by the reactance X of the shorted circuit (including a motor internal reactance), so that the maximum torque decreases in accordance with the increasing reactance X.

Thus, when this is applied to rescue operation, the car will be moved at a speed which is decided at an intersection with the unbalanced torque (see Fig. 14). Therefore, by varying the external resistance RL, an arbitrary car speed can be obtained. For example, when the external resistance is made large with the unbalanced torque being τa, the braking torque characteristic is changed from S1 to S2, and the intersection is thus moved from point Pa1 to point Pa2. As a result, the rotational speed of the motor is increased from Na1 to Na2. In addition, when the unbalanced torque becomes larger depending upon a variation in the number of passengers in the car with the same external resistance value, the rotational speed of the motor is increased from Na2 to Nb2 in the case of the characteristic of S2. In this case, if the characteristic is changed to S1 by decreasing the external resistance value, the rotational speed can be reduced to Nb1. In this manner, by changing the external resistance in accordance with the number of passengers in the car, the car speed or the rotational speed of the motor can be set to an arbitrary value.

The dynamic braking method in the known control apparatus for an elevator as described above is primarily aimed at using the dynamic brake as an auxiliary means for performing an emergency stop by short circuiting motor terminals with one another directly or through an external resistance, and as a result, there arise problems as stated below.

The unbalanced torque based on the difference in mass between the car and the counter weight is greatly varied depending upon the number of passengers at the time of rescue operation, and such a torque variation might result in a wide range from a balanced condition to as much as 1.5 times more than the rated torque of the motor. On the other hand, when the size of the motor is attempted to be reduced, the internal reactance becomes large, thus resulting in reduction in the maximum torque of the dynamic brake. Accordingly, in cases where the unbalanced torque is large, e.g., τc, as shown in Fig. 14, the maximum value of the dynamic brake torque might be exceeded, so acceleration of the car during the rescue operation could not be suppressed.

The present invention is intended to solve the problems as referred to above, and has for its object to provide a control apparatus for an elevator, and in particular, a dynamic brake system, which is capable of suppressing the acceleration of a car at the time of rescue operation irrespective of the number of passengers in the car so as to enable the car to be moved to the nearest floor at a fixed or constant speed.

DISCLOSURE OF THE INVENTION

The present invention reside in a control apparatus for an elevator in which a permanent magnet synchronous motor using a permanent magnet as a field magnet is provided as a winch, with respective phase terminals of the permanent magnet synchronous motor being short circuited to form a dynamic brake circuit, characterized by including: capacitors for short circuiting the respective phase terminals of the permanent magnet synchronous motor when the dynamic brake circuit is formed; and a switching device for switching the respective phase terminals of the permanent magnet synchronous motor from a drive circuit to the capacitors to provide connections therebetween.

The invention includes a circuit for switching the capacitors between a star connection and a delta connection so as to short circuit the respective phase terminals of the permanent magnet synchronous motor, wherein the capacitance of the dynamic brake circuit is made variable.

Further the capacitors for short circuiting the respective phase terminals of the permanent magnet synchronous motor comprise a plurality of capacitors each with a switch connected in parallel, the plurality of capacitors being connected in series, or in parallel, or in series and parallel, with respect to one another, so that the capacitance of the dynamic brake circuit is made variable by opening or closing each of the switches.

Further a reactor is provided for each phase of the permanent magnet synchronous motor at a location between each of the capacitors and each phase of the motor.

Furthermore each of the reactors includes a one with a tap changer having a plurality of taps, and the inductance of the dynamic brake circuit is made variable.

Still further, the present invention is characterized by including: a rescue operation execution determining section for determining, based on a command from an elevator control panel, whether rescue operation is to be executed; a brake condition extracting section for extracting a braking condition of the elevator from the elevator control panel; and a short circuit selecting section for changing, upon receipt of a rescue operation executing command from the rescue operation execution determining section, the capacitance or inductance of the dynamic brake circuit by driving either one of a changing circuit for the star connection and the delta connection, switches of the capacitors and tap changers of the reactors based on the braking condition of the elevator extracted by the brake condition extracting section.

According to the present invention, in the rescue operation under failure of an elevator that is driven by a winch using a permanent magnet motor, it is possible to reduce the combined or synthesized impedance of the inductance and the capacitors at a specific rotational speed of the motor by inserting capacitors in the dynamic brake circuit of the motor in series with the phase windings, respectively. As a result, a difference in phase between an electric current flowing through the dynamic brake circuit and a voltage induced in the motor can be reduced, whereby braking torque can be increased at the specific rotational speed.

## BRIEF DESCRIPTION OF THE DRAWINGS

Fig. 1 is a constructional view of a control apparatus for an elevator according to the present invention;
Fig. 2 is an equivalent circuit diagram of a dynamic brake circuit according to the present invention;
Fig. 3 is a view showing the dynamic brake characteristic of the dynamic brake circuit according to the present invention;
Fig. 4 is a constructional view showing a modified form of the control apparatus for an elevator according to the present invention;
Fig. 5 is a view showing another example of an external impedance circuit of the dynamic brake circuit according to the present invention;
Fig. 6 is a view showing one example of a changing circuit for changing between a star connection and a delta connection of the external impedance circuit of the dynamic brake circuit according to the present invention;
Fig. 7 is a view showing another example of the external impedance circuit of the dynamic brake circuit according to the present invention;
Fig. 8 is a view showing a further example of the external impedance circuit of the dynamic brake circuit according to the present invention;
Fig. 9 is a view showing a still further example of the external impedance circuit of the dynamic brake circuit according to the present invention;
Fig. 10 is a view explaining a change in braking torque according to the change of C of the external impedance of the dynamic brake circuit according to the present invention and L;
Fig. 11 is a view showing one example of the configuration of a portion, particularly related to controlling rescue operation, of a control system in the control apparatus for an elevator according to the present invention;
Fig. 12 is a constructional view of a control apparatus for an elevator including such a kind of known dynamic brake circuit;
Fig. 13 is an equivalent circuit diagram of the known dynamic brake circuit; and
Fig. 14 is a view showing the dynamic brake characteristic of the dynamic brake circuit of Fig. 13.

## BEST MODE FOR CARRYING OUT THE INVENTION

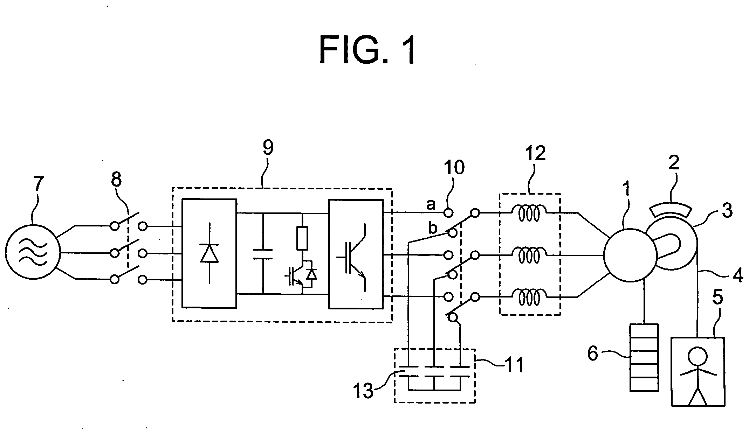

Fig. 1 is a constructional view of a control apparatus for an elevator according to one embodiment of the present invention, in which a winch using a permanent magnet motor is provided and a dynamic brake circuit is employed. The same or corresponding parts as those in the known one are identified by the same symbols. In this figure, 1 designates a permanent magnet synchronous motor that acts as a winch, 2 a brake, 3 a sheave, 4 a rope wrapped around the sheave 3, 5 a car connected with one end of the rope 4, and 6 a counter weight that is connected with the other end of the rope 4 for compensating for half the weight of the car 5 and a movable load.

In addition, 7 designates a three-phase AC power supply, 8 an electromagnetic contactor, 9 an inverter that supplies electric power of a variable voltage and a variable frequency (VVVF) to the motor 1, 10 a switching device for braking switching, 11 an external impedance circuit for dynamic braking comprising capacitors 13, and 12 reactors.

In Fig. 1, the capacitors 13 are provided as the external impedance circuit 11 for dynamic braking. Moreover, in order to suppress the surge voltage of the inverter 9, the reactor 12 may be inserted in each phase between the inverter 9 and the motor 1.

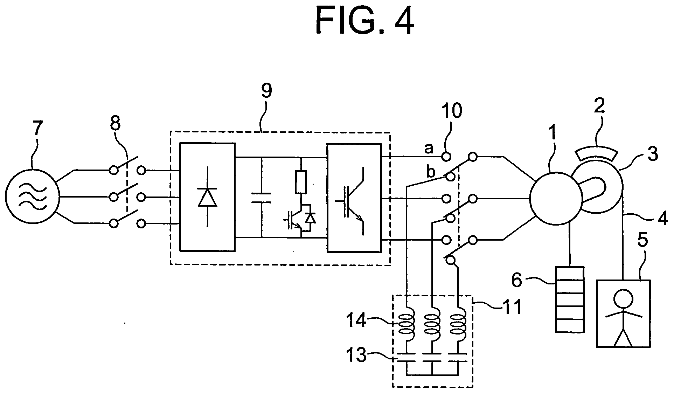

Further, Fig. 4 is a configuration example when the reactors 12 are not provided, but in which reactors 14 are added in such a manner as to be connected, as an external impedance circuit 11, in series with the capacitors 13, respectively.

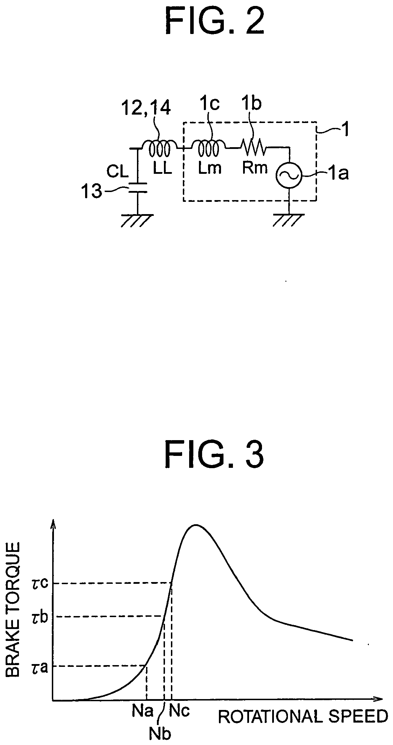

These configurations are such that an external resistance in the known configuration is replaced by a capacitor or a series circuit of a capacitor and a reactor, and by switching the brake switching device 10 to side b at the time of rescue operation, the terminals of the motor 1 or the motor circuit are short circuited through the capacitors 13 and the reactors 12 or 14, as shown in Fig. 2

The dynamic brake characteristic in this case is shown in Fig. 3. The shorted circuit is a series circuit of an internal impedance (Rm, Lm) of the motor 1 and the external capacitors CL(13) and the reactors LL (12 or 14). The brake torque has a characteristic in which it takes a maximum value at a rotational speed of the motor at which the resonance frequency f of the shorted circuit becomes a value expressed by $f = 1/\{2\pi\sqrt{(LC)}\}$, where L (inductance) = LL + Lm, and C (capacitance) = CL.

In addition, the maximum brake torque value can be made a value by far greater than the rated torque of the motor by properly selecting CL and LL. Further, since the brake torque has a characteristic that it increases suddenly from a certain rotational speed of the motor, if the unbalanced torque changes to values such as $\tau a$, $\tau b$ and $\tau c$, the rotational speed is substantially the same such as Na, Nb and Nc. Accordingly, a stable intersection between the dynamic brake torque and the unbalanced torque can be obtained irrespective of the number of passengers, thus making it easy to perform the operation of moving the car to the nearest floor at a constant speed in a safe manner.

Here, note that even in case where the reactors 12 are not provided, or where the reactors 14 are not provided in the external impedance circuit 11, there can be obtained an effect of improved characteristic due to the winding inductance Lm of the motor 1 and the capacitor CL of the external impedance. An advantageous effect provided by the insertion of the external reactor into the shorted circuit is that if the inductance LL is set to a value sufficiently larger than the winding inductance Lm of the motor, motors of different designs can be accommodated by a single kind of external impedance circuit.

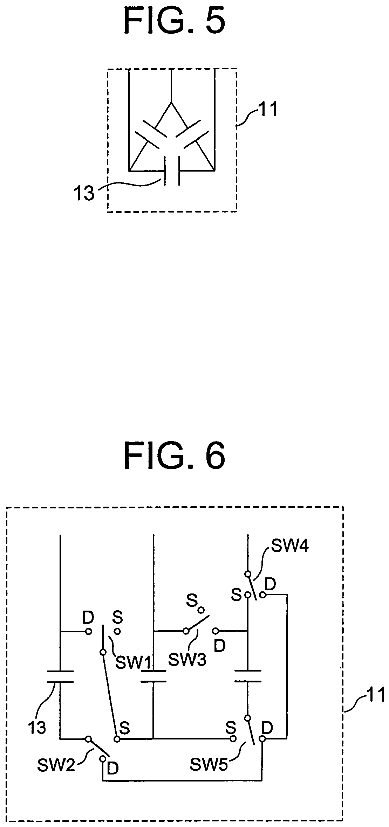

Fig. 5 shows another example of the external impedance circuit 11. In Fig. 5, by switching the capacitor connection from a star connection into a delta connection in accordance with the winding inductance Lm of the motor 1, the value of the capacitance C of the capacitor can be changed to ensure a desired brake torque characteristic even without the reactor LL, whereby the cost can be reduced to the extent that the reactor is not needed. One example of a circuit for switching the capacitor connection between the star connection and the delta connections is shown in Fig. 6. In Fig. 6, five switches SW1 - SW5 are used, and they are switched to side S for the star connection, and to side D for the delta connection.

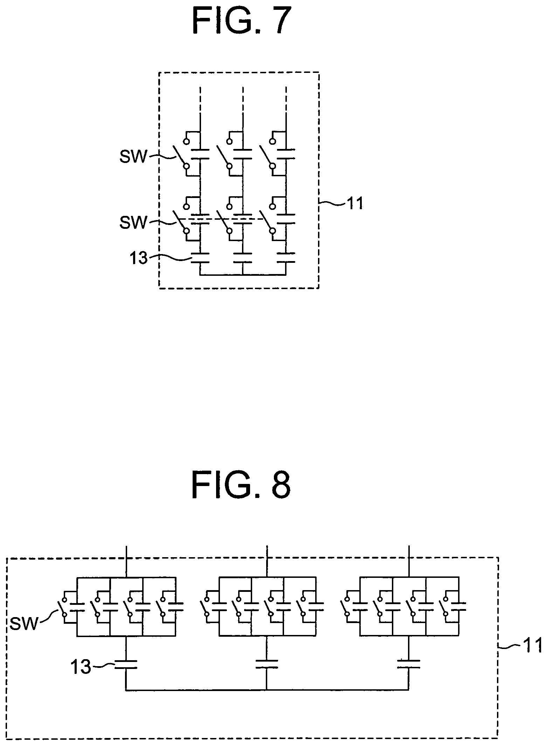

Similarly, Fig. 7 shows that a plurality of capacitors 13 are arranged in series with one another in such a manner that the capacitance C is switched over by means of a plurality of switches SW. In addition, capacitors 13 with switches SW arranged in a manner as shown in Fig. 8 may be arranged in combination in parallel or series with one another.

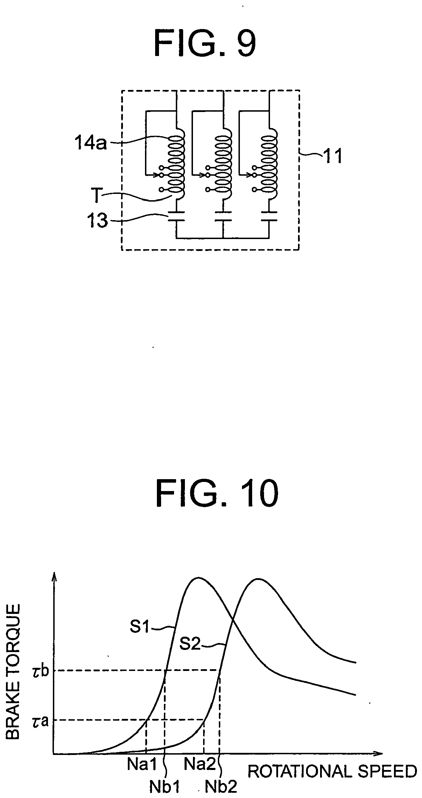

Further, Fig. 9 shows a plurality of reactors 14a each with intermediate taps are arranged in such a manner that the inductance L can be changed to ensure a desired brake torque characteristic by switching the taps by means of tap changers T in accordance with the winding inductance Lm of the motor 1.

Thus, if the external capacitor CL or the reactor LL is provided with a plurality of intermediate taps in this manner, motors of different designs can be accommodated by a single kind of external impedance circuit.

Moreover, since the rotational speed that provides the maximum torque is decided by the product of L and C, the brake torque can be changed to values such as S1, S2 in Fig. 10 by switching L or C as stated above, so that the terminal speed of the car during rescue operation can be changed according to the situation.

In general, the capacitance of the capacitor required to obtain a car speed suitable for rescue operation becomes considerably large with respect to the motor inductance, but in recent years, a compact capacitor of a large capacitance such as an electric double layer capacitor is coming into practical use, and utility thereof for a portable rescue apparatus is expected.

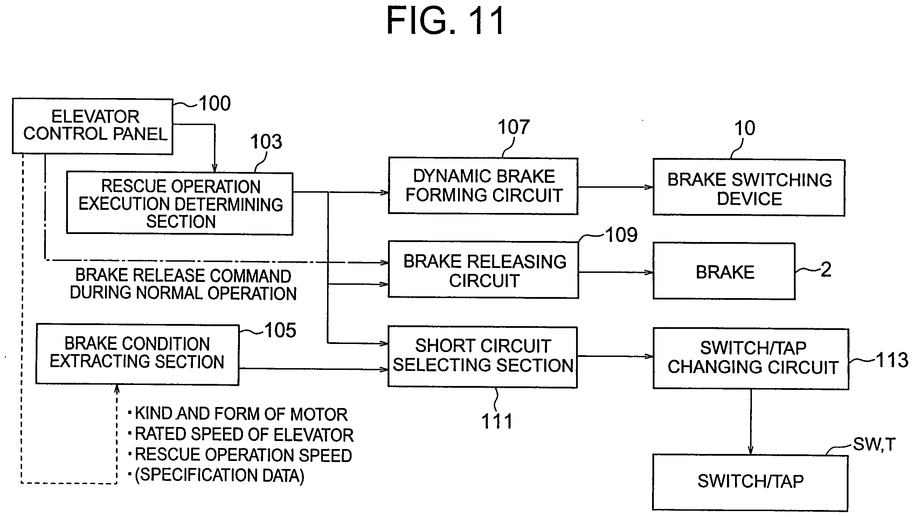

Fig. 11 is a view showing one example of the configuration of a portion, particularly related to controlling rescue operation, of a control system in the control apparatus for an elevator according to the present invention, in which control parts such as an electromagnetic contactor 8, an inverters 9, and the like are omitted. The switches and taps (see Fig. 5 - Fig. 9) of the external impedance are switched to change the terminal velocity of the car during the rescue operation according to the situation.

In Fig. 11, 100 designates an elevator control panel that generally controls the operation of the elevator, and 103 a rescue operation execution determining section that determines whether to execute a rescue operation and generates a command. For example, when a motor drive apparatus fails, disabling the normal operation of the elevator, the rescue operation execution determining section receives a command from the elevator control panel 100 to activate the control circuit, so that a short circuiting condition of the brake circuit is selected to form a shorted circuit, thereby releasing the brake to execute rescue operation. In addition, after the brake is released to permit the car to start moving, a command for changing the moving or traveling speed of the car is given to a short circuit selecting section 111 to be described later, so that the construction of a shorted circuit or external impedance circuit 11 is changed, thereby adjusting the moving speed of the car to a prescribed value.

10 designates a brake switching device 10 shown in Fig. 1, Fig. 4, etc., that comprises a contactor for isolating the motor 1 in a motor main circuit from a drive circuit including the inverter 9, etc., to switch the connection of the motor to the shorted circuit. 107 designates a dynamic brake forming circuit that receives a command from the rescue operation execution determining section 103 to drive the prescribed brake switching device 10, thereby forming a circuit that can carry out dynamic braking.

109 designates a brake releasing circuit that releases the brake 2 by a brake release command from the control panel 100. At the time of rescue operation, by releasing the brake 2 based on the command from the rescue operation execution determining section 103 after the formation of the dynamic brake circuit, the car 5 begins to move while being braked under the action of an unbalanced load between the car and the weight 6, so that it moves to a rescue floor by going up or down substantially at a prescribed speed.

105 designates a brake condition extracting section that the internal resistances or inductances of motors vary one from another during rescue operation, as a result of which the moving speeds of cars employing such motors also vary one from another. In addition, it is necessary to change the moving speed of a car according to the rated speed of the related elevator, and to change the rescue operation speed of the car due to various problems peculiar to elevators. Accordingly, necessary data (the kind and form of a motor, the rated speed of an elevator, the rescue operation speed, specification data, etc.) are extracted and obtained based on the condition set in the control panel 100.

111 designates a short circuit selecting section that selects the condition of a shorted circuit (that is, whether the circuit of a capacitor to be short circuited is a star connection or a delta connection, whether the switch SW of each capacitor is short circuited, whether the intermediate taps of each reactor are short circuited, etc.) based on the data extracted by the brake condition extracting section 105, thereby forming required short circuits. Moreover, the configuration of the shorted circuits are changed according to a command from the rescue operation execution determining section 103.

113 designates a switch/tap changing circuit that drives the switches SW and tap changers T in response to a command of the short circuit selecting section 111.

Now, one example of the operation of selecting an optimal dynamic brake will be described below.

1) A dynamic brake circuit suitable for the relevant elevator system is selected in advance based on a variety of kinds of control data by means of the brake condition extracting section 105.

2) When rescue operation is needed, the rescue operation execution determining section 103 operates the brake switching device 10 to switch the motor main circuit to the brake circuit, i.e., the dynamic brake circuit by means of the dynamic brake forming circuit 107. At that time, the switch/tap changing circuit 113 is driven by the short circuit selecting section 111 so as to form the brake circuit selected in 1) above, whereby necessary switches SW or tap changers T are opened or closed or driven to form a brake circuit suitable for the elevator system.

3) When the brake circuit is formed, a release command is given to the brake releasing circuit 109 to drive the brake 2, so that the brake 2 is thereby opened, permitting the car 5 to be accelerated under gravity by the unbalance in weight between the car 5 and the counter weight 6, as a result of which the car is accelerated up to a speed at which the braking force due to dynamic braking becomes equal to the car acceleration under gravity, and thereafter the car is moving substantially at a constant speed.

4) When the car 5 comes to a prescribed stop position, the rescue operation execution determining section 103 generates a command to the brake releasing circuit 109 to operate the brake 2, so that the car 5 is stopped at the prescribed stop position by the braking force of the brake 2.

Next, reference will be made to one example of the operation of changing the speed of the car while the car is moving for rescue operation, and in this case, 1) - 3) are the same as those stated above.

5) When the car 5 moves to a position spaced apart a predetermined distance from a prescribed stop position, the rescue operation execution determining section 103 generates an arrival floor command to the short circuit selecting section 111 so that the short circuit selecting section 111 changes, upon receipt of the arrival floor command, the brake torque shown in Fig. 10 for example from present S2 to S1. This is achieved by changing the circuit configuration of the shorted circuit. The stop position or the position the prescribed distance before that stop position can be recognized with the control panel 100 according to a well-known method.

6) When the brake torque becomes higher with respect to the same rotational speed as in this example, the unbalanced load or the unbalanced torque remains unchanged so that the moving speed of the car 5 is reduced to become balanced with the brake torque. This means that the moving speed of the car 5 is reduced immediately before the stop position.

7) Thereafter, when the car 5 comes to the prescribed stop position, the rescue operation execution determining section 103 generates a command to the brake releasing circuit 109 so as to operate the brake 2, whereby the car 5 is stopped at the prescribed stop position by the braking force of the brake 2. This means, at this time, that the moving speed of the car is reduced immediately before the stoppage of the car. Thus, the arrival floor accuracy of the car upon stoppage thereof at the prescribed position can be improved by stopping the car 5 at low speed.

INDUSTRIAL APPLICABILITY

As described above, according to the present invention, there is provided a control apparatus for an elevator in which a permanent magnet synchronous motor using a permanent magnet as a field magnet is provided as a winch, with respective phase terminals of the permanent magnet synchronous motor being short circuited to form a dynamic brake circuit, characterized by including: capacitors for short circuiting the respective phase terminals of the permanent magnet synchronous motor when the dynamic brake circuit is formed; and a switching device for switching the respective phase terminals of the permanent magnet synchronous motor from a drive circuit to the capacitors to provide connections therebetween. With the above arrangement, the combined impedance of the inductance in the permanent magnet synchronous motor and the capacitors can be reduced at a specific rotational speed of the motor, so that a difference in phase between an electric current flowing through the dynamic brake circuit and a voltage induced can be reduced. As a result, braking torque can be increased at the specific rotational speed of the motor, whereby rescue operation after an emergency stop of the car can be carried out substantially at a constant speed irrespective of a car load for example.

Preferably, provision is made for a circuit for switching the capacitors between a star connection and a delta connection so as to short circuit the respective phase terminals of the permanent magnet synchronous motor, wherein the capacitance of the dynamic brake circuit is made variable. Thus, the range of the rotational speed of the motor in which the brake torque is made large can be changed.

Preferably, the capacitors for short circuiting the respective phase terminals of the permanent magnet synchronous motor comprise a plurality of capacitors each with a switch connected in parallel, the plurality of capacitors being connected in series, or in parallel, or in series and parallel, with respect to one another, so that the capacitance of the dynamic brake circuit is made variable by opening or closing each of the switches. Thus, the range of the rotational speed of the motor in which the brake torque is made large can be changed.

Preferably, a reactor is provided for each phase of the permanent magnet synchronous motor at a location between each of the capacitors and each phase of the motor. Thus, the combined impedance of the inductances of the motor and the reactors as well as the capacitors can be reduced at a specific rotational speed, so that a difference in phase between an electric current flowing through the dynamic brake circuit and a voltage induced can be reduced. As a result, braking torque can be increased at a specific rotational speed of the motor, whereby rescue operation after an emergency stop of the car can be carried out substantially at a constant speed irrespective of a car load for example.

Preferably, each of the reactors includes a one with a tap changer having a plurality of taps, and the inductance of the dynamic brake circuit is made variable. Thus, the range of the rotational speed of the motor in which the brake torque is made large can be changed.

Preferably, the present invention includes: a rescue operation execution determining section for determining, based on a command from an elevator control panel, whether rescue operation is to be executed; a brake condition extracting section for extracting a braking condition of the elevator from the elevator control panel; and a short circuit selecting section for changing, upon receipt of a rescue operation executing command from the rescue operation execution determining section, the capacitance or inductance of the dynamic brake circuit by driving either one of a changing circuit for the star connection and the delta connection, switches of the capacitors and tap changers of the reactors based on the braking condition of the elevator extracted by the brake condition extracting section. Accordingly, by properly changing the range of the rotational speed of the motor in which the brake torque is made large, for example, at the time of rescue operation after an emergency stop of the car, the terminal speed of the car can be changed in accordance with the situation.

**Claims**

1. A control apparatus for an elevator in which a permanent magnet synchronous motor (1) using a permanent magnet as a field magnet is provided as a winch, with respective phase terminals of said permanent magnet synchronous motor (1) being short circuited to form a dynamic brake circuit, comprising:

    capacitors (13) for short circuiting the respective phase terminals of said permanent magnet synchronous motor (1) when said dynamic brake circuit is formed, said capacitors (13) comprising a plurality of capacitors each with a switch (SW, SW1 - SW5) connected in parallel;
    a reactor (12, 14, 14a) provided for each phase of said permanent magnet synchronous motor (1) at a location between each of said capacitors (13) and said motor (1), each of said reactors (14a) comprising a tap changer (T) having a plurality of taps;
    a switching device (10) for switching the respective phase terminals of said permanent magnet synchronous motor (1) from a drive circuit to said capacitors (13) to provide connections therebetween;

    **characterized in that** it further comprises:

    a circuit for switching said capacitors (13) between a star connection and a delta connection so as to short circuit the respective phase terminals of said permanent magnet synchronous motor (1), wherein the capacitance of said dynamic brake circuit is made variable;

a rescue operation execution determining section (103) for determining, based on a command from an elevator control panel (100), whether rescue operation is to be executed;

a brake condition extracting section (105) for extracting a braking condition of said elevator from said elevator control panel (100); and

a short circuit selecting section (111) for changing, upon receipt of a rescue operation executing command from said rescue operation execution determining section (103), the capacitance or inductance of said dynamic brake circuit by driving either one of a changing circuit (113) for said star connection and said delta connection, said switches (SW, SW1 - SW5) of said capacitors (13) and said tap changers (T) of said reactors (12, 14, 14a) based on the braking condition of said elevator extracted by said brake condition extracting section (105).

2. The control apparatus for an elevator according to claim 1, **characterized in that** said plurality of capacitors are connected in series, or in parallel, or in series and parallel, with respect to one another, so that the capacitance of said dynamic brake circuit is made variable by opening or closing each of said switches (sw, 'sw1 - SW5).

3. The control apparatus for an elevator according to claim 1, **characterized in that** the inductance of said dynamic brake circuit is made variable.


**Patentansprüche**

1. Steuereinrichtung für einen Aufzug, in welchem ein Permanentmagnet-Synchronmotor (1), der einen Permanentmagneten als einen Feldmagneten verwendet, als eine Winde vorgesehen ist, wobei jeweilige Phasen-Anschlüssen des Permanentmagnet-Synchronmotors (1) kurzgeschlossen sind, um eine dynamische Bremsschaltung zu bilden, umfassend:

Kondensatoren (13) zum Kurzschließen der jeweiligen Phasenanschlüsse des Permanentmagnet-Synchronmotors (1), wenn die dynamische Bremsschaltung gebildet wird, wobei die Kondensatoren (13) eine Vielzahl von Kondensatoren umfassen, die jeder mit einem parallel verbundenen Schalter (SW, SW1 - SW5) verbunden sind;

eine Drosselspule (12, 14, 14a), die für jede Phase des Permanentmagnet-Synchronmotors (1) an einem Ort zwischen jedem der Kondensatoren (13) und dem Motor (1) vorgesehen ist, wobei jede der Drosselspulen (14a) einen Stufensteller (T) mit einer Vielzahl von Abgriffen umfasst;

eine Schaltvorrichtung (10) zum Umschalten der jeweiligen Phasenanschlüsse des Permanentmagnet-Synchronmotors (1) aus der Antriebsschaltung zu den Kondensatoren (13), um Verbindungen dazwischen bereitzustellen;

**dadurch gekennzeichnet, dass** sie weiter umfasst:

eine Schaltung zum Umschalten der Kondensatoren (13) zwischen einer Sternverbindung und einer DeltaVerbindung, um so die jeweiligen Phasenanschlüsse des Permanentmagnet-Synchronmotors (1) kurzzuschließen, wobei die Kapazität der dynamischen Bremsschaltung variabel gemacht ist;

einen Rettungsbetriebsausführungs-Bestimmungsabschnitt (103) zum Bestimmen, basierend auf einem Befehl aus einem Aufzugsteuerpaneel (100), ob eine Rettungsoperation auszuführen ist;

einen Bremsbedingungs-Extrahierabschnitt (105) zum Extrahieren einer Bremsbedingung des Aufzugs aus dem Aufzugsteuerpaneel (100); und

einen Kurzschlussauswahlabschnitt (111) zum Ändern, beim Empfang eines Rettungsoperationsausführungsbefehls aus dem Rettungsoperationsausführungs-Bestimmungsabschnitt (103), der Kapazität oder Induktivität der dynamischen Bremsschaltung durch Antreiben eines von einer Änderungsschaltung (113) für die Sternverbindung und die Deltaverbindung, der Schalter (SW, SW1 - SW5) der Kondensatoren (13) und der Stufensteller (T) der Drosselspulen (12, 14, 14a), basierend auf der durch den Bremsbedingungs-Extraktionsabschnitt (105) extrahierten Bremsbedingung des Aufzugs.

2. Steuereinrichtung für einen Aufzug gemäß Anspruch 1, **dadurch gekennzeichnet, dass** die Vielzahl von Kondensatoren in Reihe oder parallel oder in Reihe und parallel jeweils miteinander verbunden ist, so dass die Kapazität der dynamischen Bremsschaltung durch Öffnen oder Schließen jedes der Schalter (sw, 'sw1 - SW5) variabel gemacht wird.

3. Steuereinrichtung für einen Aufzug gemäß Anspruch 1, **dadurch gekennzeichnet, dass** die Induktivität der dynamischen Bremsschaltung variabel gemacht ist.

## Revendications

1. Appareil de commande pour un ascenseur dans lequel un moteur synchrone à aimant permanent (1) utilisant un aimant permanent comme aimant à champ est doté d'un treuil, des bornes de phase respectives dudit moteur synchrone à aimant permanent (1) étant court-circuitées pour former un circuit de freinage dynamique, comprenant :

   des condensateurs (13) pour court-circuiter les bornes de phase respectives dudit moteur synchrone à aimant permanent (1) lorsque ledit circuit de freinage dynamique est formé, lesdits condensateurs (13) comprenant une pluralité de condensateurs dotés chacun d'un commutateur (SW, SW1-SW5) connectés en parallèle ;
   un réacteur (12, 14, 14a) prévu pour chaque phase dudit moteur synchrone à aimant permanent (1) à un emplacement entre chacun desdits condensateurs (13) et ledit moteur (1), chacun desdits réacteurs (14a) comprenant un changeur de bobine (T) ayant une pluralité de bobines ;
   un dispositif de commutation (10) pour commuter les bornes de phase respectives dudit moteur synchrone à aimant permanent (1) entre un circuit d'entraînement et lesdits condensateurs (13) pour fournir des connexions entre eux ;
   **caractérisé en ce qu'**il comprend en outre :

   un circuit pour commuter lesdits condensateurs (13) entre une connexion en étoile et une connexion en triangle de façon à court-circuiter les bornes de phase respectives dudit moteur synchrone à aimant permanent (1), dans lequel la capacitance dudit circuit de freinage dynamique est rendue variable ;
   une section de détermination d'exécution d'opération de sauvetage (103) pour déterminer, sur la base d'une commande provenant d'un panneau de commande d'ascenseur (100), si une opération de sauvetage doit être exécutée ;
   une section d'extraction de condition de freinage (105) pour extraire une condition de freinage dudit ascenseur depuis ledit panneau de commande d'ascenseur (100) ; et
   une section de sélection de court-circuit (111) pour changer, à réception d'une commande d'exécution d'opération de sauvetage depuis ladite section de détermination d'exécution d'opération de sauvetage (103), la capacitance ou l'inductance dudit circuit de freinage dynamique en entraînant un parmi un circuit de changement (113) pour ladite connexion en étoile et ladite connexion en triangle, lesdits commutateurs (SW, SW1-SW5) desdits condensateurs (13) et lesdits changeurs de bobine (T) desdits réacteurs (12, 14, 14a) sur la base de la condition de freinage dudit ascenseur extraite par ladite section d'extraction de condition de freinage (105).

2. Appareil de commande pour un ascenseur selon la revendication 1, **caractérisé en ce que** ladite pluralité de condensateurs sont connectés en série, ou en parallèle, ou en série et en parallèle, les uns par rapport aux autres, de telle sorte que la capacitance dudit circuit de freinage dynamique est rendue variable par l'ouverture ou la fermeture de chacun desdits commutateurs (sw, 'sw1-SW5).

3. Appareil de commande pour un ascenseur selon la revendication 1, **caractérisé en ce que** l'inductance dudit circuit de freinage dynamique est rendue variable.

# FIG. 1

# FIG. 2

# FIG. 3

# FIG. 4

EP 1 520 829 B1

# FIG. 5

# FIG. 6

# FIG. 7

# FIG. 8

# FIG. 9

# FIG. 10

# FIG. 11

ELEVATOR CONTROL PANEL ~100

RESCUE OPERATION EXECUTION DETERMINING SECTION 103

BRAKE RELEASE COMMAND DURING NORMAL OPERATION

BRAKE CONDITION EXTRACTING SECTION ~105

· KIND AND FORM OF MOTOR
· RATED SPEED OF ELEVATOR
· RESCUE OPERATION SPEED
· (SPECIFICATION DATA)

DYNAMIC BRAKE FORMING CIRCUIT 107

BRAKE SWITCHING DEVICE 10

BRAKE RELEASING CIRCUIT ~109

BRAKE ~2

SHORT CIRCUIT SELECTING SECTION 111

SWITCH/TAP CHANGING CIRCUIT ~113

SWITCH/TAP ~SW,T

EP 1 520 829 B1

FIG. 12

# FIG. 13

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000309475 B

- JP H099699 B